(19)

Europäisches
Patentamt
European
Patent Office
Office européen
des brevets

(11) **EP 2 423 065 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(51) Int Cl.:
***B60W 30/20*** *(2006.01)*  ***B60L 15/20*** *(2006.01)*
***B60W 50/00*** *(2006.01)*  ***B60K 6/48*** *(2007.10)*

(21) Anmeldenummer: **11166223.5**

(22) Anmeldetag: **16.05.2011**

(54) **Verfahren und System zur Steuerung einer elektrischen Maschine in einem Antriebsstrang eines Kraftfahrzeuges**

Method and system for controlling an electric device in a power transmission of a motor vehicle

Procédé et système de commande d'une machine électrique dans une ligne de transmission d'un véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2010 DE 102010039701**

(43) Veröffentlichungstag der Anmeldung:
**29.02.2012 Patentblatt 2012/09**

(73) Patentinhaber: **Robert Bosch GmbH**
**70442 Stuttgart (DE)**

(72) Erfinder:
 • **Kretschmer, Markus**
 **71711, Murr (DE)**
 • **Goetting, Gunther**
 **70499, Stuttgart (DE)**
 • **Klymenko, Mykhaylo**
 **70839, Gerlingen (DE)**

 • **Peter, Markus**
 **74374, Zaberfeld (DE)**

(56) Entgegenhaltungen:
 DE-A1-102007 043 736    US-A1- 2010 004 806
 US-B2- 7 317 978

 • **NILKHAMHANG I ET AL: "Iterative tuning algorithm for feedforward and feedback control of two-mass motor system with physical parameter identification", CONTROL APPLICATIONS, 2005. CCA 2005. PROCEEDINGS OF 2005 IEEE CONFERE NCE ON TORONTO, CANADA AUG. 29-31, 2005, PISCATAWAY, NJ, USA,IEEE, 29. August 2005 (2005-08-29), Seiten 1624-1629, XP010836878, DOI: 10.1109/CCA.2005.1507365 ISBN: 978-0-7803-9354-7**

EP 2 423 065 B1

**Beschreibung**

Die Erfindung betrifft ein Verfahren und ein System zur Steuerung einer elektrischen Maschine in einem Antriebsstrang eines Kraftfahrzeuges.

Stand der Technik

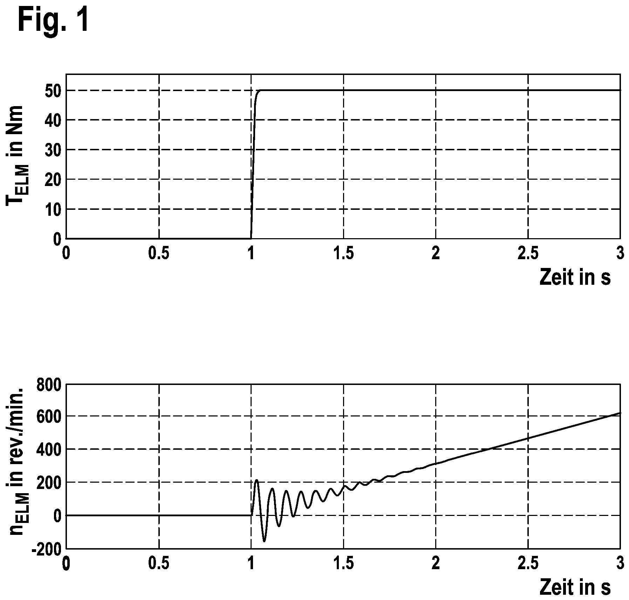

Immer häufiger werden elektrische Maschinen als Antriebsaggregate in Antriebssträngen von Kraftfahrzeugen (Elektrofahrzeugen, Hybridfahrzeugen) genutzt. Eine grundlegende Eigenschaft des Antriebsstrangs eines Kraftfahrzeuges ist dessen Schwingungsfähigkeit. Das bedeutet, dass vor allem bei dynamischen Lastwechseln trotz eines ideal glatten Verlaufs eines Vortriebsmoments der elektrischen Maschine die Drehzahl der elektrischen Maschine beträchtlich schwingen kann. Figur 1 zeigt beispielhaft einen zeitlichen Verlauf eines Drehmoments $T_{ELM}$ einer elektrischen Maschine über der Zeit sowie darunter dargestellt die daraus resultierende Drehzahl $n_{ELM}$ der elektrischen Maschine. Dabei sind die auftretenden Schwingungen nach dem Lastwechsel bei t = 1s deutlich erkennbar. Derartige Schwingungen treten unabhängig von der konkreten Ausgestaltung des Antriebsstranges auf und sind sowohl bei "konventionellen" Antriebssträngen als auch bei Antriebssträngen, bei welchen eine elektrische Maschine an ein Differentialgetriebe einer angetriebene Achse ("elektrische Achse") oder direkt an eine Radnabe ("Radnabenantrieb") gekoppelt ist, beobachtbar. Die eingebrachten Schwingungen bedeuten aber neben Komforteinbußen auch eine vermeidbare mechanische Belastung des Antriebsstrangs.

Aus der DE 10 2005 015 484 A1 ist ein Verfahren zur Steuerung eines Antriebsstranges eines Fahrzeuges mit einem Verbrennungsmotor, mindestens einer Elektromaschine, einem vollautomatischen Getriebe und mindestens einer Steuereinrichtung zur Steuerung des Verbrennungsmotors und der mindestens einen Elektromaschine bekannt, bei dem ein Lastwechselschlag durch eine Vorsteuerung der mindestens einen Elektromaschine vermieden wird.

Aus der DE 10 2004 039 756 A1 ist ein Verfahren zum Betreiben eines Antriebssystems bekannt, welches eine Antriebseinrichtung, eine Abtriebseinrichtung und eine die Abtriebseinrichtung mit der Antriebseinrichtung verbindende Verbindungseinrichtung umfasst. Dabei wird ein aktueller Schwingungszustand des Antriebssystems bestimmt und auf der Basis dieses Schwingungszustands mindestens eine Korrekturgröße erzeugt, mit der das Antriebssystem zur Schwingungsdämpfung wenigstens mittelbar beaufschlagt wird. Zur Bestimmung des aktuellen Schwingungszustands des Antriebssystems werden entsprechende Zustandsgrößen mindestens von Antriebseinrichtung, Abtriebseinrichtung und Verbindungseinrichtung ermittelt.

Aus der US 7,317,978 B2 ist eine Steuervorrichtung für eine elektrische Maschine in einem Antriebssystem und ein Verfahren zur Steuerung einer elektrischen Maschine in einem Antreibssystem bekannt, bei dem die Schwingungsdämpfung der elektrischen Maschine verbessert wird, in dem ein Final-Drehmoment-Wert bestimmt wird, in dem ein Soll-Drehmoment-Wert mit einem Korrektur-Drehmoment-Wert überlagert wird, und die elektrische Maschine in Abhängigkeit des Final-Drehmoment-Werts gesteuert wird.

Offenbarung der Erfindung

Die vorliegende Erfindung stellt ein Verfahren zur Steuerung einer elektrischen Maschine in einem Antriebsstrang eines Kraftfahrzeuges gemäß den Merkmalen von Anspruch 1 bereit.

Die vorliegende Erfindung stellt auch ein System zur Steuerung einer elektrischen Maschine in einem Antriebsstrang eines Kraftfahrzeuges gemäß den Merkmalen von Anspruch 5 bereit.

Entsprechende Weiterbildungen sind in den abhängigen Ansprüchen 2 bis 4 und 6 festgelegt.

Vorteile der Erfindung

Durch den Einsatz einer Drehmomenten-Vorsteuerung ist es möglich, das z.B. von einem Fahrer über eine entsprechende Betätigung des Fahrpedals oder durch eine übergeordnete Steuereinrichtung vorgegebene Soll-Drehmoment für die elektrische Maschine durch Überlagerung eines Vorsteuer-Drehmoments derart zu modulieren, dass allein durch den geeigneten zeitlichen Verlauf des auf diese Weise erzeugten korrigierten Soll-Drehmoments Triebstrangschwingungen vermieden oder zumindest deutlich reduziert werden. Das erfindungsgemäße Verfahren und das erfindungsgemäße System haben dabei den Vorteil, dass zur Bestimmung des Vorsteuer-Drehmoments neben dem vorgegebenen Soll-Drehmoment keine aktuellen Zustands- oder Betriebsgrößen aus dem Kraftfahrzeug benötigt werden. Zur Festlegung der Übertragungsfunktion der Vorsteuereinheit ist lediglich ein physikalisches Modell des gesamten Antriebsstrangs, das heißt der elektrischen Maschine, der Räder, eines Getriebes und ggf. weiterer Komponenten des Antriebsstrangs, erforderlich, welches die Schwingungsfähigkeit des mechanischen Aufbaus des Gesamtsystems nachstellt. Dieses Modell kann im Rahmen der Fahrzeugfertigung beispielsweise in Form eines Ein- oder Mehrmassenschwingers festgelegt werden. Daraus kann über bekannte mathematische Methoden die Übertragungsfunktion des gesamten Antriebsstrangs und daraus letztendlich die Übertragungsfunktion der Vorsteuereinheit ermitteln werden. Die Vorsteuereinheit kann dann durch einen entsprechenden Vorsteueralgorithmus realisiert sein, welcher in einer Steuereinheit, vorteilhaft der Steuereinheit der elektrischen Maschine, hinterlegt ist. Gemäß der Erfindung ist der Antriebsstrang des Kraftfahrzeuges als Zweimassenschwinger modelliert und die Übertragungsfunktion der Vorsteuereinheit ist gegeben durch

$$G = \frac{J_2 s^2}{(J_1 + J_2)s^2 + d(J_1 + J_2)s + c(J_1 + J_2)}$$

mit

$J_1$: Trägheitsmoment der elektrischen Maschine
$J_2$: Ersatzträgheitsmoment des Kraftfahrzeuges inklusive aller Fahrwiderstände
c: Ersatzfedersteifigkeit des Antriebsstrangs
d: Ersatzdämpfungskonstante des Antriebsstrangs

Eine derartige einfache Übertragungsfunktion ist häufig bereits ausreichend, um eine zufriedenstellende Vermeidung oder Reduzierung von Drehzahlschwingungen der elektrischen Maschine zu erreichen.

Ist eine durch die erfindungsgemäße Vorsteuerung erreichte Reduzierung der Drehzahlschwingungen der elektrischen Maschine nicht ausreichend, so kann ein Beobachter eingesetzt werden, der aus gemessenen Drehzahlsignalen der elektrischen Maschine einen Schwingungsanteil schätzt und dem vorgegebenen Solldrehmoment ein Kompensations-Drehmoment überlagert. Demgemäß ist es in einer weiteren Ausführungsform der Erfindung vorgesehen, dass eine aktuelle Drehzahl der elektrischen Maschine mit Hilfe einer Drehzahlsensorik ermittelt wird, aus der aktuellen Drehzahl mit Hilfe eines Beobachters auf Basis eines gespeicherten physikalischen Modells des Antriebsstrangs ein Schwingungsanteil geschätzt wird, auf Basis des geschätzten Schwingungsanteils durch eine Auswerteeinheit ein Kompensationsdrehmoment bestimmt wird, und das korrigierte Soll-Drehmoment für die elektrische Maschine bestimmt wird, indem das Vorsteuer-Drehmoment und das Kompensationsdrehmoment dem vorgegebenen Soll-Drehmoment überlagert werden. Der Beobachter und die Auswerteeinheit können dabei durch einen entsprechenden Schätz- bzw. Auswertealgorithmus realisiert sein, welcher in einer Steuereinheit, vorteilhaft der Steuereinheit der elektrischen Maschine, hinterlegt ist.

Weist der Antriebsstrang zwischen der elektrischen Maschine und einer anzutreibenden Welle ein Getriebe mit einstellbarem Übersetzungsverhältnis auf, so verändert sich das Systemverhalten in Abhängigkeit von der aktuellen Getriebeübersetzung. Demgemäß sieht eine Ausführungsform der Erfindung vor, dass der Schwingungsanteil mit Hilfe mehrerer gespeicherter physikalischer Modelle des Antriebsstrangs geschätzt werden kann und dass das jeweils zur Schätzung verwendete Modell in Abhängigkeit von der aktuellen Getriebeübersetzung ausgewählt wird. Auf diese Weise kann die Modellierung und dadurch das darauf basierende Kompensations-Drehmoment besser an das jeweilige Systemverhalten angepasst werden und damit eine effektivere Schwingungsdämpfung erreicht werden.

Zusätzlich kann es auch vorgesehen sein, dass für ein gespeichertes physikalisches Modell, welches zur Schätzung des Schwingungsanteils verwendet wird, mehrere Parametersätze gespeichert sind und der jeweils zur Schätzung verwendete Parametersatz in Abhängigkeit von der aktuellen Getriebeübersetzung ausgewählt wird. Auch dadurch können die Modellierung und dadurch das darauf basierende Kompensations-Drehmoment besser an das jeweilige Systemverhalten angepasst werden und damit eine effektivere Schwingungsdämpfung erreicht werden.

Weitere Merkmale und Vorteile von Ausführungsformen der Erfindung ergeben sich aus der nachfolgenden Beschreibung mit Bezug auf die beigefügten Figuren.

Kurze Beschreibung der Zeichnungen

Fig. 1   einen zeitlichen Verlauf eines Drehmoments und einer Drehzahl einer elektrischen Maschine in einem Antriebsstrang eines Kraftfahrzeugs ohne eine erfindungsgemäße Vorsteuerung,

Fig. 2   eine schematische Darstellung eines Antriebsstrangs eines Kraftfahrzeuges,

Fig. 3   eine schematische Darstellung eines erfindungsgemäßen Steuersystems mit Vorsteuereinheit,

Fig. 4   ein physikalisches Ersatzmodell eines Antriebsstrangs (Zweimassenschwinger),

Fig. 5   einen zeitlichen Verlauf eines Drehmoments und einer Drehzahl einer elektrischen Maschine in einem Antriebsstrang eines Kraftfahrzeugs jeweils mit und ohne erfindungsgemäße Vorsteuerung und

Fig. 6   eine schematische Darstellung eines erfindungsgemäßen Steuersystems mit Vorsteuereinheit und Beobachter

Ausführungsformen der Erfindung

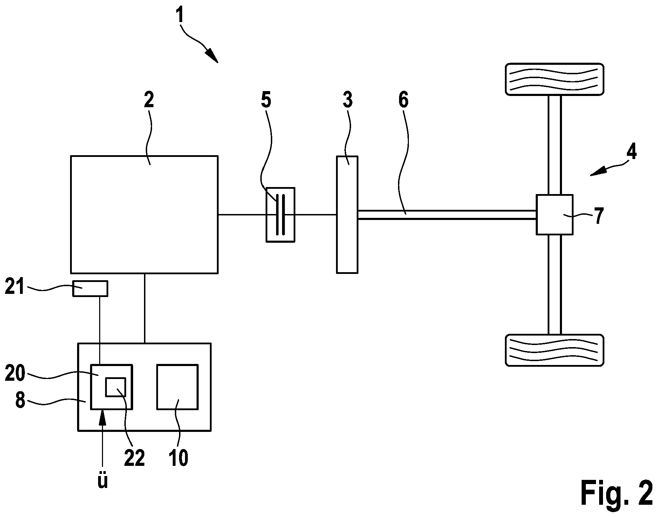

Figur 2 zeigt schematisch eine mögliche Ausführungsform eines Antriebsstrangs 1 eines Kraftfahrzeuges. Der Antriebsstrang 1 für das im Übrigen nicht dargestellte Kraftfahrzeug weist eine elektrische Maschine 2, ein Getriebe 3 und eine mit der Getriebeausgangswelle verbundene antreibbare Achse 4 auf. Die antreibbare Achse kann dabei wahlweise eine Vorder- oder Hinterachse des Kraftfahrzeuges sein. Zwischen der elektrischen Maschine 2 und dem Getriebe 3 ist eine Kupplung 5 angeordnet, welche im geschlossenen Zustand die elektrische Maschine 2 mit dem Getriebe 3 verbindet und im geöffneten Zustand einen abtriebsseitig der Verbrennungskraftmaschine liegenden Teil des Antriebsstrangs 1 von der elektrischen Maschine 2 entkoppelt. Das Getriebe 3 kann als automatisches oder automatisiertes Getriebe oder auch als Handschaltgetriebe ausgeführt sein. Eine vom Getriebe 3 ausgehende anzutreibende Welle (Abtriebswelle) 6 führt direkt von der Getriebeausgangsseite zu einer Eingangsseite eines Achsdifferentials 7, welches eine Drehbewegung der Abtriebswelle 6 in eine die Achse 4 antreibende Drehbewegung umwandelt. Zur Steuerung der elektrischen Maschine 2 ist eine Steuereinheit 8 vorgesehen.

Im dargestellten Ausführungsbeispiel ist der Antriebsstrang als "klassischer" Antriebsstrang eines Elektrofahrzeugs, welches die elektrische Maschine als einziges Antriebsaggregat aufweist, ausgeführt. Es sei aber darauf hingewiesen, dass es für die Anwendbarkeit der Erfindung grundsätzlich unerheblich ist, ob es sich bei dem Fahrzeug um ein Elektrofahrzeug oder um eine Hybridfahrzeug handelt, dessen Antriebsstrang neben der elektrischen Maschine ein weiteres Antriebsaggregat, in der Regel in Form einer Verbrennungskraftmaschine, umfasst. Auch kann der Antriebsstrang mehrere elektrische Maschinen umfassen, welche als Antriebsaggregate genutzt werden. Ebenso ist es für die Anwendbarkeit der Erfindung unerheblich, an welcher Stelle eines Antriebsstrangs eine elektrische Maschine angekoppelt ist, solange diese als Antriebsaggregat nutzbar ist. So kann die elektrische Maschine auch direkt oder indirekt über ein Getriebe mit dem Achsdifferential verbunden sein. Ebenso könnten elektrische Maschinen direkt oder indirekt über ein Getriebe mit Radnaben gekoppelt sein.

Eine grundlegende Eigenschaft des Antriebsstrangs 1 eines Kraftfahrzeuges ist dessen Schwingungsfähigkeit. Das bedeutet, dass vor allem bei dynamischen Lastwechseln trotz eines ideal glatten Verlaufs eines Vortriebsmoments der elektrischen Maschine 2 die Drehzahl der elektrischen Maschine 2 beträchtlich schwingen kann (vgl. Fig. 1).

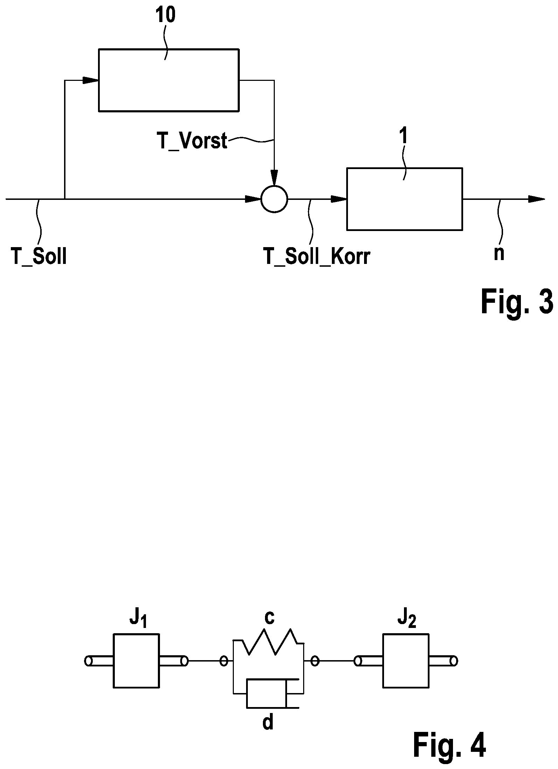

Um derartige Schwingungen zu vermeiden oder zumindest erheblich zu verringern, ist eine Vorsteuereinheit 10 (vgl. auch Figur 3) vorgesehen, welche abhängig von einem vorgegebenen Soll-Drehmoment T_Soll der elektrischen Maschine 2, welches z.B. durch eine Betätigung eines nicht dargestellten Fahrpedals oder durch eine übergeordnete Steuereinheit vorgegeben wird, ein Vorsteuer-Drehmoment T_Vorst bestimmt. Das Vorsteuer-Drehmoment T_Vorst wird dann dem Soll-Drehmoment T_Soll überlagert und auf diese Weise ein korrigiertes Solldrehmoment T_Soll_Korr gebildet, auf dessen Basis anschließend die elektrische Maschine 2 durch die Steuereinheit 8 gesteuert wird.

Um dabei die gewünschte Vermeidung oder zumindest Verringerung von Schwingungen der Drehzahl n der elektrischen Maschine 2, welche durch die Schwingungsfähigkeit des Antriebsstrangs 1 hervorgerufen werden, zu erreichen, weist die Vorsteuereinheit 10 eine Übertragungsfunktion auf, welche einem Schwingungsanteil einer für den gesamten Antriebsstrang 1 modellgestützt ermittelten Übertragungsfunktion entspricht. Diese modellgestützt ermittelte Gesamtübertragungsfunktion beschreibt eine Abhängigkeit einer Drehzahl der elektrischen Maschine 2 von einem Drehmoment, mit welchem die elektrische Maschine 2 betrieben wird. Um diese Übertragungsfunktion zu ermitteln, wird der gesamte Antriebsstrang 1 des Fahrzeugs, inklusive elektrischer Maschine 2, Getriebe 3, Achse 4, Kupplung 5, Räder und ggf. weitere Komponenten, zunächst in Form eines physikalischen Ersatzmodells beschrieben.

Figur 4 zeigt beispielhaft eine physikalische Modellierung des Antriebsstrangs 1 als Zweimassenschwinger gemäß der Erfindung. Je nach konkreter Ausgestaltung des Antriebsstrangs 1 oder auch nach konkreten Anforderungen können aber auch andere Ersatzmodelle wie Ein- oder Mehrmassenschwinger eingesetzt werden. Das Ersatzmodell in Form des Zweimassenschwingers weist folgende Parameter auf:

$J_1$: Trägheitsmoment der elektrischen Maschine
$J_2$: Ersatzträgheitsmoment des Kraftfahrzeuges inklusive aller Fahrwiderstände
c: Ersatzfedersteifigkeit des Antriebsstrangs
d: Ersatzdämpfungskonstante des Antriebsstrangs
u: Systemanregung; hier: Drehmoment der elektrischen Maschine

Für den in Figur 4 dargestellten Zweimassenschwinger ergeben sich im Zeitbereich folgende Bewegungsgleichungen:

$$\dot{x}_1(t) = x_3(t) \tag{1}$$

$$\dot{x}_2(t) = x_4(t) \tag{2}$$

$$\dot{x}_3(t) = -\frac{c}{J_1} \cdot (x_1(t) - x_2(t)) - \frac{d}{J_1} \cdot (x_3(t) - x_4(t)) + \frac{1}{J_1} u(t) \tag{3}$$

$$\dot{x}_4(t) = -\frac{c}{J_2} \cdot (x_1(t) - x_2(t)) + \frac{d}{J_2} \cdot (x_3(t) - x_4(t)) \tag{4}$$

Werden obige Gleichungen (1) bis (4), z.B. durch Laplace-Transformation, in den Frequenzbereich übertragen und die Drehzahl der elektrischen Maschine als Ausgangsgröße y definiert, so ergibt sich folgende Übertragungsfunktion G(s) für den gesamten Antriebsstrang:

$$G(s) = \frac{y(s)}{u(s)} = \frac{J_2 s^2 + ds + c}{(J_1 + J_2)s^2 + d(J_1 + J_2)s + c(J_1 + J_2)} \tag{5}$$

Diese Übertragungsfunktion beschreibt damit eine Abhängigkeit einer Drehzahl der elektrischen Maschine 2 von einem Drehmoment, mit welchem die elektrische Maschine 2 betrieben wird. Aus Gleichung (5) kann nun der Schwingungsanteil der Übertragungsfunktion G(s) des gesamten Antriebsstrangs 1 ermittelt werden, in dem nur die nicht-linearen und nicht-konstanten Anteile (Summanden im Zähler) berücksichtigt werden. Daraus ergibst sich der Schwingungsanteil $G_{OSC}(s)$ der Gesamtübertragungsfunktion G(S) zu:

$$G_{OSC}(s) = \frac{y_{OSC}(s)}{u(s)} = \frac{J_2 s^2}{(J_1 + J_2)s^2 + d(J_1 + J_2)s + c(J_1 + J_2)} \tag{6}$$

Wird nun die Übertragungsfunktion Gvorst(s) der Vorsteuerungseinheit gleich dem Schwingungsanteil $G_{OSC}(s)$ der modellbasiert ermittelten Übertragungsfunktion G(S) des gesamten Antriebsstrangs 1 gesetzt, so führt das zu einer deutlichen Reduzierung der Drehzahlschwingungen der elektrischen Maschine 2.

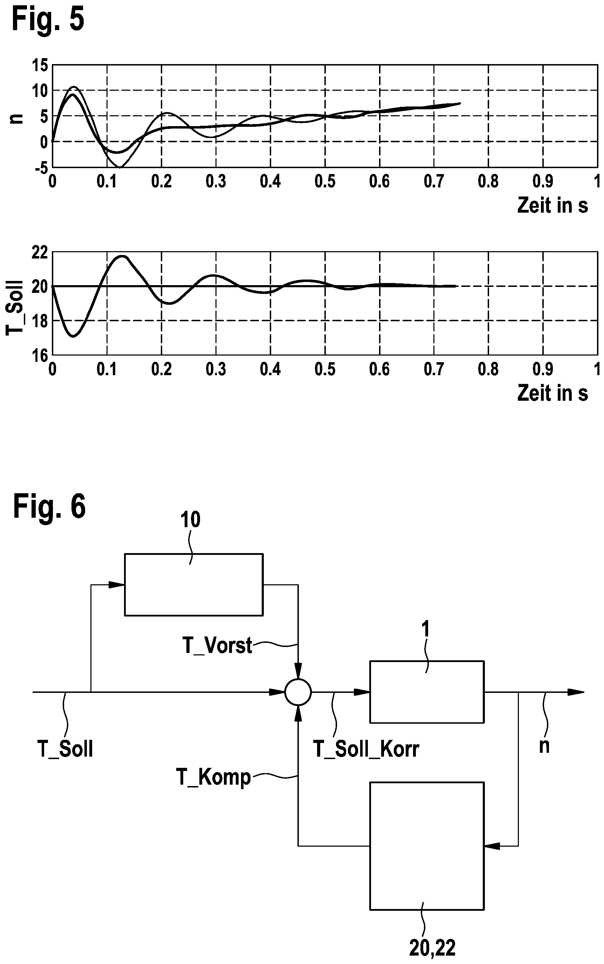

Figur 5 zeigt eine beispielhafte Gegenüberstellung des zeitlichen Verlauf eines Soll-Drehmoments (unten) und einer daraus resultierenden Drehzahl (oben) der elektrischen Maschine 2 bei Verwendung der erfindungsgemäßen Vorsteuerung (fett gezeichnete Kennlinien) zu den entsprechenden Verläufen des Soll-Drehmomentes und der resultierenden Drehzahl ohne Vorsteuerung (dünn gezeichnete Kennlinien).

Um die Drehzahlschwingungen der elektrischen Maschine 2 weiter zu reduzieren, kann ein Beobachter 20 (vgl. Fig. 2) eingesetzt werden, der aus gemessenen Drehzahlsignalen der elektrischen Maschine 2 auf Basis eines gespeicherten physikalischen Modells des Antriebsstrangs 1 einen Schwingungsanteil schätzt. Eine aktuelle Drehzahl n kann dabei mit Hilfe einer Drehzahlsensorik 21 (vgl. Fig. 2) ermittelt werden. Auf Basis des geschätzten Schwingungsanteils wird dann durch eine Auswerteeinheit 22 ein Kompensationsdrehmoment T_Komp bestimmt, welches wie das Vorsteuer-Drehmoment T_Vorst ebenfalls dem vorgegebenen Soll-Drehmoment T_Soll überlagert wird (vgl. Fig. 6). Die elektrische Maschine 2 wird dann auf Basis des auf diese Weise erzeugten korrigierten Soll-Drehmoments T_Soll_Korr gesteuert.

Gemäß der in Fig. 2 dargestellten Ausführungsform sind die Vorsteuereinheit 10, der Beobachter 29 und die Auswerteeinheit 22, welche z.B. in Form entsprechender Algorithmen realisiert sein können, integraler Bestandteil der Steuereinheit 8 der elektrischen Maschine 2. Diese Komponenten können aber auch zumindest teilweise als selbständige Einheiten realisiert sein oder in ein anderes Steuergerät des Kraftfahrzeuges integriert sein.

Weist der Antriebsstrang 1, wie in Fig. 2 dargestellt, zwischen der elektrischen Maschine 2 und einer anzutreibenden Welle 6 ein Getriebe 3 mit einstellbarem Übersetzungsverhältnis auf, so hängt das Verhalten des Gesamtsystems auch entscheidend von einer aktuellen Getriebeübersetzung oder Gangstufe ü ab. Um diesem Sachverhalt Rechnung zu tragen kann der Schwingungsanteil durch den Beobachter 20 auch mit Hilfe mehrerer gespeicherter physikalischer Modelle des Antriebsstrangs 1 schätzbar sein, wobei das jeweils zur Schätzung verwendete Modell in Abhängigkeit von der aktuellen Getriebeübersetzung ü ausgewählt wird. Die Getriebeübersetzung ü oder' eine die Getriebeübersetzung charakterisierende Größe, wie z.B. die Gangstufe, kann dem Beobachter 21 bzw. der Steuereinheit, in welcher der Beobachter realisiert ist, z.B. über einen CAN-Bus zugeführt werden.

Zusätzlich können für ein gespeichertes physikalisches Modell, welches zur Schätzung des Schwingungsanteils in dem Beobachter 20 verwendet wird, mehrere Parametersätze gespeichert sein. Der jeweils zur Schätzung verwendete Parametersatz kann dann ebenfalls in Abhängigkeit von der aktuellen Getriebeübersetzung ü ausgewählt werden. Auch dadurch können die Modellierung und dadurch das darauf basierende Kompensations-Drehmoment besser an das jeweilige Systemverhalten angepasst werden und damit eine effektivere Schwingungsdämpfung erreicht werden.

**Patentansprüche**

1. Verfahren zur Steuerung einer elektrischen Maschine (2) in einem Antriebsstrang (1) eines Kraftfahrzeuges, wobei die elektrische Maschine (2) als Antriebsaggregat für das Kraftfahrzeug genutzt wird, bei dem

   - eine Vorsteuereinheit (10) abhängig von einem vorgegebenen Soll-Drehmoment (T_Soll) der elektrischen Maschine (2) ein Vorsteuer-Drehmoment (T_Vorst) bestimmt, wobei die Vorsteuereinheit (10) eine Übertragungsfunktion ($G_{Vorst}$(s)) aufweist, welche einem Schwingungsanteil ($G_{OSC}$(s)) einer für den gesamten Antriebsstrang (1) modellgestützt ermittelten Übertragungsfunktion (G(s)) entspricht, welche eine Abhängigkeit einer Drehzahl (n) der elektrischen Maschine (2) von einem Drehmoment (T), mit welchem die elektrische Maschine (2) betrieben wird, beschreibt,
   - ein korrigiertes Soll-Drehmoment (T_Soll_Korr) für die elektrische Maschine (2) bestimmt wird, indem das Vorsteuer-Drehmoment (T_Vorst) dem vorgegebenen Soll-Drehmoment (T_Soll) überlagert wird, und
   - die elektrische Maschine (2) in Abhängigkeit von dem korrigierten Soll-Drehmoment (T_Soll_Korr) gesteuert wird,

   **dadurch gekennzeichnet, dass** der Antriebsstrang (1) als Zweimassenschwinger modelliert ist und daraus die Übertragungsfunktion (G(s)) des gesamten Antriebsstrangs (1) ermittelt wird, wobei die Übertragungsfunktion ($G_{Vorst}$(s)) der Vorsteuereinheit (10) gegeben ist durch

   $$G = \frac{J_2 s^2}{(J_1 + J_2)s^2 + d(J_1 + J_2)s + c(J_1 + J_2)}$$

   mit

   $J_1$: Trägheitsmoment der elektrischen Maschine
   $J_2$: Ersatzträgheitsmoment des Kraftfahrzeuges inklusive aller Fahrwiderstände
   c: Ersatzfedersteifigkeit des Antriebsstrangs
   d: Ersatzdämpfungskonstante des Antriebsstrangs.

2. Verfahren nach Anspruch 1, wobei

   - eine aktuelle Drehzahl (n) der elektrischen Maschine (2) ermittelt wird,
   - aus der aktuellen Drehzahl (n) mit Hilfe eines Beobachters (20) auf Basis eines gespeicherten physikalischen Modells des Antriebsstrangs (1) ein Schwingungsanteil geschätzt wird,
   - auf Basis des geschätzten Schwingungsanteils ein Kompensationsdrehmoment (T_Komp) bestimmt wird,
   - das korrigierte Soll-Drehmoment(T_Soll_Korr) für die elektrische Maschine (2) bestimmt wird, indem das Vorsteuer-Drehmoment (T_Vorst) und das Kompensationsdrehmoment (T_Komp) dem vorgegebenen Soll-Drehmoment (T_Soll) überlagert werden.

3. Verfahren nach Anspruch 2, wobei

   - der Antriebsstrang (1) zwischen der elektrischen Maschine (2) und einer anzutreibenden Welle (6) ein Getriebe (3) mit einstellbarem Übersetzungsverhältnis (ü) aufweist,
   - der Schwingungsanteil mit Hilfe mehrerer gespeicherter physikalischer Modelle des Antriebsstrangs (1) geschätzt werden kann und

6

- das jeweils zur Schätzung verwendete Modell in Abhängigkeit von einer aktuellen Getriebeübersetzung (ü) ausgewählt wird.

4.  Verfahren nach einem der Ansprüche 2 oder 3, wobei

   - der Antriebsstrang (1) zwischen der elektrischen Maschine (2) und einer anzutreibenden Welle (6) ein Getriebe (3) mit einstellbarem Übersetzungsverhältnis (ü) aufweist,
   - für ein gespeichertes physikalisches Modell, welches zur Schätzung des Schwingungsanteils verwendet wird, mehrere Parametersätze gespeichert sind und
   - der jeweils zur Schätzung verwendete Parametersatz in Abhängigkeit von einer aktuellen Getriebeübersetzung (ü) ausgewählt wird.

5.  System zur Steuerung einer elektrischen Maschine (2) in einem Antriebsstrang (1) eines Kraftfahrzeuges, wobei die elektrische Maschine (2) als Antriebsaggregat für das Kraftfahrzeug genutzt wird, mit

   - eine Vorsteuereinheit (10), welche abhängig von einem vorgegebenen Soll-Drehmoment (T_Soll) der elektrischen Maschine (2) ein Vorsteuer-Drehmoment (T_Vorst) bestimmt, wobei die Vorsteuereinheit (10) eine Übertragungsfunktion ($G_{Vorst}(s)$) aufweist, welche einem Schwingungsanteil ($G_{OSC}(s)$) einer für den gesamten Antriebsstrang (1) modellgestützt ermittelten Übertragungsfunktion ($G(s)$) entspricht, welche eine Abhängigkeit einer Drehzahl (n) der elektrischen Maschine (2) von einem Drehmoment (T), mit welchem die elektrische Maschine (2) betrieben wird, beschreibt, wobei der Antriebsstrang (1) als Zweimassenschwinger modelliert ist und daraus die Übertragungsfunktion ($G(s)$) des gesamten Antriebsstrangs (1) ermittelt wird, wobei die Übertragungsfunktion ($G_{Vorst}(s)$) der Vorsteuereinheit (10) gegeben ist durch

$$G = \frac{J_2 s^2}{(J_1 + J_2)s^2 + d(J_1 + J_2)s + c(J_1 + J_2)}$$

mit

   $J_1$: Trägheitsmoment der elektrischen Maschine
   $J_2$: Ersatzträgheitsmoment des Kraftfahrzeuges inklusive aller Fahrwiderstände
   c: Ersatzfedersteifigkeit des Antriebsstrangs
   d: Ersatzdämpfungskonstante des Antriebsstrangs, und

   - einer Steuereinheit (8) für die elektrische Maschine (2), welche ein korrigiertes Soll-Drehmoment (T_Soll_Korr) für die elektrische Maschine (2) bestimmt, indem sie das Vorsteuer-Drehmoment (T_Vorst) dem vorgegebenen Soll-Drehmoment (T_Soll) überlagert, und die elektrische Maschine (2) in Abhängigkeit von dem korrigierten Soll-Drehmoment (T_Soll_Korr) steuert.

6.  System nach Anspruch 5, wobei das System zusätzlich umfasst:

   - eine Drehzahlsensorik (21), welche eine aktuelle Drehzahl (n) der elektrischen Maschine (2) ermittelt,
   - einen Beobachter (20), welcher aus der aktuellen Drehzahl (n) auf Basis eines gespeicherten physikalischen Modells des Antriebsstrangs (1) einen Schwingungsanteil schätzt, und
   - eine Auswerteeinheit (22), welche auf Basis des geschätzten Schwingungsanteils ein Kompensations-Drehmoment (T_Komp) bestimmt,

   wobei die Steuereinheit (8) das korrigierte Soll-Drehmoment (T_Soll_Korr) für die elektrische Maschine (2) bestimmt, indem sie das Vorsteuer-Drehmoment (T_Vorst) und das Kompensations-Drehmoment (T_Komp) dem vorgegebenen Soll-Drehmoment (T_Soll) überlagert.

**Claims**

1.  Method for controlling an electric machine (2) in a drive train (1) of a motor vehicle, the electric machine (2) being used as a drive unit for the motor vehicle, in which

- a pilot control unit (10) determines a pilot torque (T_Vorst) as a function of a predefined target torque (T_Soll) of the electric machine (2), the pilot control unit (10) having a transfer function ($G_{Vorst}(s)$) which corresponds to an oscillatory component ($G_{osc}(s)$) of a model-based transfer function (G(s)) determined for the entire drive train (1) which describes a dependence of a rotational speed (n) of the electric machine (2) on a torque (T) with which the electric machine (2) is operated,
- a corrected target torque (T_Soll_Korr) for the electric machine (2) is determined by the pilot control torque (T_Vorst) being superimposed on the predefined target torque (T_Soll), and
- the electric machine (2) being controlled as a function of the corrected target torque (T_Soll_Korr),
**characterized in that** the drive train (1) is modelled as a two-mass oscillator and the transfer function (G(s)) of the entire drive train (1) is determined therefrom, wherein the transfer function ($G_{Vorst}(s)$) of the pilot control unit (10) is given by

$$G = \frac{J_2 s^2}{(J_1 + J_2)s^2 + d(J_1 + J_2)s + c(J_1 + J_2)}$$

with

$J_1$: moment of inertia of the electric machine
$J_2$: equivalent moment of inertia of the motor vehicle including all driving resistances
c: equivalent spring stiffness of the drive train
d: equivalent damping constant of the drive train.

2. Method according to Claim 1, wherein

- a current rotational speed (n) of the electric machine (2) is determined,
- an oscillatory component is estimated from the current rotational speed (n) with the aid of an observer (20) on the basis of a stored physical model of the drive train (1),
- a compensation torque (T_Komp) is determined on the basis of the estimated oscillatory component,
- the corrected target torque (T_Soll_Korr) for the electric machine (2) is determined by the pilot control torque (T_Soll_Vorst) and the compensation torque (T_Komp) being superimposed on the predefined target torque (T_Soll).

3. Method according to Claim 2, wherein

- the drive train (1) between the electric machine (2) and a shaft (6) to be driven has a transmission (3) with adjustable transmission ratio (ü),
- the oscillatory component can be estimated with the aid of a plurality of stored physical models of the drive train (1), and
- the model respectively used for the estimation is chosen as a function of a current transmission ratio (ü).

4. Method according to either of Claims 2 and 3, wherein

- the drive train (1) between the electric machine (2) and a shaft (6) to be driven has a transmission (3) with adjustable transmission ratio (ü),
- a plurality of parameter sets are stored for a stored physical model which is used to estimate the oscillatory component, and
- the parameter set respectively used for the estimation is chosen as a function of a current transmission ratio (ü).

5. System for controlling an electric machine (2) in a drive train (1) of a motor vehicle, the electric machine (2) being used as a drive unit for the motor vehicle, having

- a pilot control unit (10) which determines a pilot torque (T_Vorst) as a function of a predefined target torque (T_Soll) of the electric machine (2), the pilot control unit (10) having a transfer function ($G_{Vorst}(s)$) which corresponds to an oscillatory component ($G_{osc}(s)$) of a model-based transfer function (G(s)) determined for the entire drive train (1) which describes a dependency of a rotational speed (n) of the electric machine (2) on a torque (T) with which the electric machine (2) is operated, the drive train (1) being modelled as a two-mass oscillator and the transfer function (G(s)) of the entire drive train (1) is determined therefrom, wherein the transfer function ($G_{Vorst}$(s)) of the pilot control unit (10) is given by

$$G = \frac{J_2 s^2}{(J_1 + J_2)s^2 + d(J_1 + J_2)s + c(J_1 + J_2)}$$

with

$J_1$: moment of inertia of the electric machine
$J_2$: equivalent moment of inertia of the motor vehicle including all driving resistances
c: equivalent spring stiffness of the drive train
d: equivalent damping constant of the drive train, and

- a control unit (8) for the electric machine (2), which determines a corrected target torque (T_Soll_Korr) for the electric machine (2) by superimposing the pilot control torque (T_Vorst) on the predefined target torque (T_Soll), and controls the electric machine (2) as a function of the corrected target torque (T_Soll_Korr).

6. System according to Claim 5, wherein the system additionally comprises:

- a rotational speed sensor (21), which determines a current rotational speed (n) of the electric machine (2),
- an observer (20), which estimates an oscillatory component from the current rotational speed (n) on the basis of a stored physical model of the drive train (1), and
- an evaluation unit (22), which determines a compensation torque (T_Komp) on the basis of the estimated oscillatory component,

wherein the control unit (8) determines the corrected target torque (T_Soll_Korr) for the electric machine (2) by superimposing the pilot control torque (T_Vorst) and the compensation torque (T_Komp) on the predefined target torque (T_Soll).

**Revendications**

1. Procédé de commande d'une machine électrique (2) dans un groupe motopropulseur (1) d'un véhicule automobile, la machine électrique (2) étant utilisée comme groupe propulseur pour le véhicule automobile, procédé selon lequel

- une unité de commande pilote (10) détermine un couple pilote (T_Vorst) en fonction d'un couple de consigne (T_Soll) prédéfini de la machine électrique (2), l'unité de commande pilote (10) possédant une fonction de transfert ($G_{Vorst}$(s)) qui correspond à une composante d'oscillation ($G_{OSC}$(s)) d'une fonction de transfert (G(s)) identifiée avec l'assistance d'un modèle pour l'ensemble du groupe motopropulseur (1), laquelle décrit une dépendance d'une vitesse de rotation (n) de la machine électrique (2) à un couple (T) avec lequel fonctionne la machine électrique (2),
- un couple de consigne corrigé (T_Soll_Korr) est déterminé pour la machine électrique (2) en superposant le couple pilote (T_Vorst) au couple de consigne (T_Soll) prédéfini et
- la machine électrique (2) est commandée en fonction du couple de consigne corrigé (T_Soll_Korr), **caractérisé en ce que** le groupe motopropulseur (1) est modélisé sous la forme d'un oscillateur à double masse et la fonction de transfert (G(s)) de l'ensemble du groupe motopropulseur (1) est identifiée à partir de cela, la fonction de transfert ($G_{Vorst}$(s)) de l'unité de commande pilote (10) étant donnée par

$$G = \frac{J_2 s^2}{(J_1 + J_2)s^2 + d(J_1 + J_2)s + c(J_1 + J_2)}$$

où

$J_1$ désigne le moment d'inertie de la machine électrique

J$_2$ désigne le moment d'inertie équivalent du véhicule automobile, y compris toutes les résistances à l'avancement

c désigne la raideur de ressort équivalente du groupe motopropulseur

d désigne la constante d'amortissement équivalente du groupe motopropulseur.

2. Procédé selon la revendication 1, selon lequel

- une vitesse de rotation (n) actuelle de la machine électrique (2) est identifiée,
- une composante d'oscillation est estimée à partir de la vitesse de rotation (n) actuelle à l'aide d'un observateur (20) sur la base d'un modèle physique mémorisé du groupe motopropulseur (1),
- un couple de compensation (T_Komp) est déterminé sur la base de la composante d'oscillation estimée,
- le couple de consigne corrigé (T_Soll_Korr) pour la machine électrique (2) est déterminé en superposant le couple pilote (T_Vorst) et le couple de compensation (T_Komp) au couple de consigne (T_Soll) prédéfini.

3. Procédé selon la revendication 2, selon lequel

- le groupe motopropulseur (1) possède une boîte de vitesses (3) ayant un rapport de démultiplication (ü) réglable entre la machine électrique (2) et un arbre (6) à entraîner,
- la composante d'oscillation peut être estimée à l'aide de plusieurs modèles physiques mémorisés du groupe motopropulseur (1) et
- le modèle respectivement utilisé pour l'estimation est sélectionné en fonction d'un rapport de démultiplication de boîte de vitesses (ü) actuel.

4. Procédé selon l'une des revendications 2 ou 3, selon lequel

- le groupe motopropulseur (1) possède une boîte de vitesses (3) ayant un rapport de démultiplication (ü) réglable entre la machine électrique (2) et un arbre (6) à entraîner,
- plusieurs jeux de paramètres sont mémorisés pour un modèle physique mémorisé qui est utilisé pour l'estimation de la composante d'oscillation et
- le jeu de paramètres respectivement utilisé pour l'estimation est sélectionné en fonction d'un rapport de démultiplication de boîte de vitesses (ü) actuel.

5. Système de commande d'une machine électrique (2) dans un groupe motopropulseur (1) d'un véhicule automobile, la machine électrique (2) étant utilisée comme groupe propulseur pour le véhicule automobile, comprenant

- une unité de commande pilote (10) qui détermine un couple pilote (T_Vorst) en fonction d'un couple de consigne (T_Soll) prédéfini de la machine électrique (2), l'unité de commande pilote (10) possédant une fonction de transfert (G$_{Vorst}$(s)) qui correspond à une composante d'oscillation (G$_{OSC}$(s)) d'une fonction de transfert (G(s)) identifiée avec l'assistance d'un modèle pour l'ensemble du groupe motopropulseur (1), laquelle décrit une dépendance d'une vitesse de rotation (n) de la machine électrique (2) à un couple (T) avec lequel fonctionne la machine électrique (2), le groupe motopropulseur (1) étant modélisé sous la forme d'un oscillateur à double masse et la fonction de transfert (G(s)) de l'ensemble du groupe motopropulseur (1) étant identifiée à partir de cela, la fonction de transfert (G$_{Vorst}$(s)) de l'unité de commande pilote (10) étant donnée par

$$ G = \frac{-J_2 s^2}{(J_1 + J_2)s^2 + d(J_1 + J_2)s + c(J_1 + J_2)} $$

où

J$_1$ désigne le moment d'inertie de la machine électrique

J$_2$ désigne le moment d'inertie équivalent du véhicule automobile, y compris toutes les résistances à l'avancement

c désigne la raideur de ressort équivalente du groupe motopropulseur

d désigne la constante d'amortissement équivalente du groupe motopropulseur et

- une unité de commande (8) pour la machine électrique (2), laquelle détermine un couple de consigne corrigé (T_Soll_Korr) pour la machine électrique (2) en superposant le couple pilote (T_Vorst) au couple de consigne (T_Soll) prédéfini, et commande la machine électrique (2) en fonction du couple de consigne corrigé (T_Soll_Korr).

6. Système selon la revendication 5, le système comprenant en plus :

- un système de détection de vitesse de rotation (21) qui identifie une vitesse de rotation (n) actuelle de la machine électrique (2),
- un observateur (20) qui estime une composante d'oscillation à partir de la vitesse de rotation (n) actuelle sur la base d'un modèle physique mémorisé du groupe motopropulseur (1),
- une unité d'interprétation (22) qui détermine un couple de compensation (T_Komp) sur la base de la composante d'oscillation estimée,

l'unité de commande (8) déterminant le couple de consigne corrigé (T_Soll_Korr) pour la machine électrique (2) en superposant le couple pilote (T_Vorst) et le couple de compensation (T_Komp) au couple de consigne (T_Soll) prédéfini.

# Fig. 1

Fig. 2

**10**

**T_Vorst**

**1**

**T_Soll**

**T_Soll_Korr**

**n**

# Fig. 3

$J_1$     c     $J_2$

d

# Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005015484 A1
- DE 102004039756 A1
- US 7317978 B2